# EUROPÄISCHE PATENTSCHRIFT

(11) **EP 1 457 117 B1**
(45) Veröffentlichungstag und Bekanntmachung des Hinweises auf die Patenterteilung: **04.06.2008**
(21) Anmeldenummer: 03005801.0
(22) Anmeldetag: 14.03.2003
(51) Int. Cl.: A23B 4/02, A23B 4/26

(54) **Verfahren zum Herstellen von Rohpökelwaren**
Process for the manufacture of cured raw products
Procédé pour la fabrication de produits crus salés

(43) Veröffentlichungstag der Anmeldung: 15.09.2004
(73) Patentinhaber: Hans Adler OHG, 79848 Bonndorf (DE)
(72) Erfinder: Adler, Peter, 79848 Bonndorf (DE); Högg, Klaus Josef, Dr., 79848 Bonndorf (DE)
(74) Vertreter: Patentanwälte Westphal, Mussgnug & Partner

(56) Entgegenhaltungen:
- DE-A- 3 106 265
- DE-A- 19 621 701
- US-A- 5 670 195

## Beschreibung

Die Erfindung betrifft ein Verfahren zum Herstellen von Rohpökelwaren, insbesondere rohen Schinken gemäß dem Oberbegriff des Anspruchs 1.

Zum Herstellen von Spaltschinken, z. B. von Schwarzwälder Schinken werden Schweineschlegel ausgebeint, d. h. die Knochen aus dem Schinken entfernt.

Dann werden die Fleischstücke gepökelt, d. h. mit einer Mischung von Salzen sowie gegebenenfalls Gewürzen und Zucker(n) eingerieben. Die anhaftende Salzmenge wird dabei wesentlich von der Größe bzw. Oberfläche der Schinkenstücke bestimmt. Bis zu 200 so behandelte Schinkenstücke werden zum Durchsalzen in einen entsprechend großen Behälter geschichtet; während dieser Lagerung entsteht aufgrund des osmotischen Drucks sogenannte "Eigenlake", die sich in den unteren Schichten des Behälters sammelt und in sich selbst eine Schichtung des Salzkonzentration ausbildet.

Weil beim ersten Salzen in der Regel nicht genug Salz haften bleibt, das zudem von der gebildeten Eigenlake teilweise abgespült wird, ist es üblich, die Schinken nach gewisser Zeit umzusalzen, d. h. die Schinken ein zweites Mal mit Salz einzureiben und dabei umzuschichten, um die Einflüsse der unterschiedlichen Lakeschichtungen auszugleichen. Zur Eigenlake wird mancherorts zusätzlich Lake aufgegossen, um die Schinken vollständig bedeckt und unter Luftabschluß zu halten. Um die Schinken gleichmäßig und allseitig mit Lake in Kontakt zu bringen, ist es erforderlich, die Schinken in dem Behälter je nach Größe bzw. Salzzeit der Schinken einmal oder mehrmals umzupacken, d. h. die Schinken ohne weitere Zugabe von Salz umzuschichten. Das Umsalzen bzw. Umpacken sind schwere körperliche Arbeiten. Bei diesem Verfahren wird die aufgenommene Salzmengeneben anderen Einflüssen wie Salzzeit, pH-Wert, Temperatur etc. wesentlich von der Größe bzw. Oberfläche des Schinkens bestimmt. Nach einer Lagerung von einigen Wochen werden die Schinken aus dem Behälter entnommen und getrocknet. Bei den meisten Schinkensorten, z. B. dem Schwarzwälder Schinken, ist dem Trocknen noch ein Räuchern vorgeschaltet oder mit dem Trocknen kombiniert.

Wird der Schinken aufgeschnitten verkauft, insbesondere auch bereits im Herstellungsbetrieb aufgeschnitten und abgepackt, so ist es erwünscht, daß alle Schinkenscheiben im Wesentlichen die gleiche Größe haben. Hierzu ist es bekannt, den Schinken in Quaderform zu pressen. Aus der DE 41 22 514 C1 ist es bekannt, die Schinken in quaderförmige Gitterkörbe einzupressen und in diesen Gitterkörben in dem mit Lake gefüllten Behälter zu lagern. Durch dieses Pökeln erhält der in die Gitterkörbe eingedrückte Schinken eine Formstabilität, so daß er nach der Entnahme aus der Lake und dem Gitterkorb seine Quaderform im Wesentlichen beibehält.

Am Ende des Herstellungsprozesses soll der Schinken mit einem vorgegebenen Salzgehalt über sein gesamtes Volumen gleichmäßig durchgesalzen sein. Die Salzmenge, die ein Schinken aufnehmen muß und die ihm beim Einsalzen zugeführt werden muß, ist daher vom Gewicht des Schinkens abhängig. Bei dem herkömmlichen Verfahren werden daher die Schinken nach ihrer Größe sortiert und jeweils Schinken von im Wesentlichen gleichem Gewicht gemeinsam in einem Behälter gelagert. Dadurch soll erreicht werden, daß alle Schinken mit dem gleichen in der Lake enthaltenen Salzgehalt gesalzen werden. Dies ist jedoch nicht in optimaler Weise möglich, da sich unterschiedliche Salzkonzentrationen in der Lake in dem Behälter ausbilden. Dies beruht darauf, daß zum einen die Lake zwischen den Schinken nicht ausreichend zirkuliert und zum anderen sich eine Schichtung der Salzkonzentration ausbildet. Um dies zu verhindern, ist es bspw. aus der DE 40 00 296 C1 bekannt, die Schinken in der Lake durch Gitterkörbe voneinander beabstandet zu halten und die Lake durch ein Rührwerk umzuwälzen.

Ein weiteres Problem besteht darin, daß die Salzaufnahme der Schinken von deren pH-Wert abhängt. Ein niedriger pH-Wert des Fleisches der Schweinekeule begünstigt die Salzaufnahme, während ein hoher pH-Wert die Salzaufnahme hemmt. Es ist daher üblich, den pH-Wert der Schweinekeulen zu messen und nur die Schweinekeulen mit niedrigem pH-Wert zur Herstellung von rohem Schinken zu verwenden, während die Schweinekeulen mit hohem pH-Wert zu gekochtem Schinken verarbeitet werden. Dadurch geht ein Teil des Ausgangsmaterials für die Verarbeitung zu dem höherwertigen rohen Schinken verloren. Auch die zu rohem Schinken weiter verarbeiteten Ausgangsmaterialien weisen noch Schwankungen im pH-Wert auf, der zu Qualitätsschwankungen des Endproduktes führt.

Der Erfindung liegt die Aufgabe zugrunde, ein Verfahren zur Herstellung von Rohpökelware, insbesondere rohem Schinken zu schaffen, welches zu einer verbesserten Qualität des Endproduktes und insbesondere zu geringeren Qualitätsschwankungen des Endproduktes führt.

Diese Aufgabe wird erfindungsgemäß gelöst durch ein Verfahren mit den Merkmalen des Anspruchs 1.

Vorteilhafte Ausführungen der Erfindung sind in den Unteransprüchen angegeben.

Eine bevorzugte Ausführung des erfindungsgemäßen Verfahrens wird anhand der Herstellung von rohem Schinken nachfolgend erläutert:

Zum Pökeln der Schinken werden Formbehälter verwendet, die aus Kunststoff oder Edelstahl bestehen. Die Formbehälter haben die Form eines Quaders, wobei der Boden und die Seitenwände geschlossen sind, so daß der Formbehälter eine wasserdichte Wanne bildet. An der Oberseite sind die Formbehälter offen. In ihrem oberen Höhenbereich sind die Formbehälter erweitert, so daß sie ineinander gestapelt werden können. Beim Stapeln greift jeweils der Boden eines Formbehälters in den erweiterten oberen Bereich des darunter angeordneten Formbehälters. Die Formbehälter werden vorzugsweise in mehreren unterschiedlichen Größen bereit gehalten, die den unterschiedlichen Schinkengrößen entsprechen. Bspw. werden vier unterschiedliche Größen des Formbehälters verwendet.

Die frischen ausgebeinten Schinken werden eventuell nach einer pH-Messung zunächst in einer ersten groben Wägung in Größenklassen eingeteilt, die den unterschiedlichen Größen der Formbehälter zugeordnet sind. Werden bspw. vier unterschiedliche Größen des Formbehälters verwendet, so werden die ausgebeinten Schinken entsprechend in vier Größenklassen eingeteilt.

Nach dieser Vorklassifizierung werden die Schinken einzeln gewogen. Die dem ermittelten Schinkengewicht und dem eventuell gemessenen pH-Wert entsprechende optimale Salzmenge wird rechnerisch ermittelt. Der Schinken wird dann mit einer entsprechenden Salzmenge eingerieben und in einen Formbehälter der zugehörigen Größenklasse eingelegt. Daraufhin wird mittels Wägung noch die fehlende Salzmenge auf den Schinken gegeben, bis die rechnerisch ermittelte Salzmenge exakt erreicht ist.

Die in dieser Weise mit dem gesalzenen Schinken und der Lake befüllten Formbehälter werden nach ihren Größenklassen sortiert gestapelt, wobei sie vorzugsweise auf geeigneten Paletten gestapelt werden. Beim Ineinanderstapeln der Formbehälter sitzt wegen des erweiterten oberen Bereichs der jeweils obere Formbehälter mit seinem Boden auf dem in dem darunter angeordneten Formbehälter liegenden Schinken auf. Dadurch werden die Schinken durch das Gewicht der jeweils darüber angeordneten Formbehälter in ihren Formbehälter gepreßt, so daß sie dessen Form annehmen. Durch das Eindrücken der Schinken in den Formbehälter ist dabei gewährleistet, daß die Schinken vollständig in die ihren Formbehälter füllende Lake eintauchen und durch den aufsitzenden darüber angeordneten Formbehälter unter dem Oberflächenspiegel der Lake gehalten werden. Die Schinken sind somit unter vollständigem Luftabschluß in der Lake ihres Formbehälters gehalten. Auf die obersten Formbehälter jedes Stapels wird jeweils ein leerer Formbehälter aufgesetzt, der durch geeignete Gewichte belastet wird, um auch den Schinken in dem obersten befüllten Formbehälter zu pressen. Die Stapel der Formbehälter werden auf den Paletten durch Gurte, Klammern oder dergl. gesichert.

Da jeder einzelne Schinken mit der seinem Gewicht und eventuell pH-Wert exakt entsprechenden Salzmenge versehen ist und sich in seinem individuellen Formbehälter somit in der individuell dosierten Lake befindet, ist für jeden Schinken eine optimale Qualität der Pökelung gewährleistet. Außerdem werden Qualitätsschwankungen zwischen den einzelnen Schinken vermieden. Da sich jeder Schinken in einem eigenen Formbehälter befindet, ist auch eine gleichmäßige Salzung über die gesamte Oberfläche des Schinkens gewährleistet, ohne daß ein Umsetzen oder Wenden der Schinken während der Pökel-Lagerung notwendig ist.

Die Schinken werden in ihren Formbehältern in der Lake unter Luftabschluß über eine Dauer von bspw. etwa 3-5 Wochen gelagert. Die Lagerdauer wird dabei insbesondere entsprechend der Größe der Schinken gewählt. Aufgrund der Vorklassifizierung der Schinkengrößen und der entsprechenden Größen der Formbehälter ergibt sich eine einheitliche Lagerdauer jeweils für die Schinken einer Größenklasse, d. h. für die gemeinsam auf einer Palette gestapelten Formbehälter derselben Größe.

Nach der vorgeschriebenen Lagerdauer werden die Schinken aus den Formbehältern entnommen. Da die Schinken nach dieser Pökelung bereits eine ausreichende Formstabilität aufweisen, können sie nach einem Waschvorgang zum Entfernen der verbleibenden Lake liegend je nach Schinkenart zunächst geräuchert oder ohne Räucherung getrocknet werden. Aufgrund der Formstabilität ist es dabei möglich, die Schinken auf Gitterroste, z. B. eines Räucherwagens, zu legen, so daß gewährleistet ist, daß die Schinken nur mit wenigen Punkten auf dem Gitterrost aufliegen und der Rauch unbehindert allseitig an die Schinkenoberfläche gelangen kann.

Da jeder Schinken in einem gesonderten Formbehälter aufgenommen ist, kommen die Schinken nicht unmittelbar miteinander in Berührung. Dadurch ist auch weitgehend ausgeschlossen, dass eine mikrobiologische Kontamination zwischen den Schinken stattfindet. Es besteht darüber hinaus auch die Möglichkeit, in die Formbehälter auf den jeweiligen Schinken abgestimmte Startkulturen einzubringen, die die Entwicklung einer für den Pökelvorgang vorteilhafte mikrobiologischen Flora begünstigen und die Entwicklung einer nachteiligen mikrobiologischen Flora unterdrücken.

Das erfindungsgemäße Verfahren ist nicht auf die Herstellung von rohem Schinken beschränkt, sondern kann zur Herstellung der verschiedensten Pökelwaren eingesetzt werden, z.B. zum Pökeln von Koteletts, Bauchspeck, Kasseler usw.

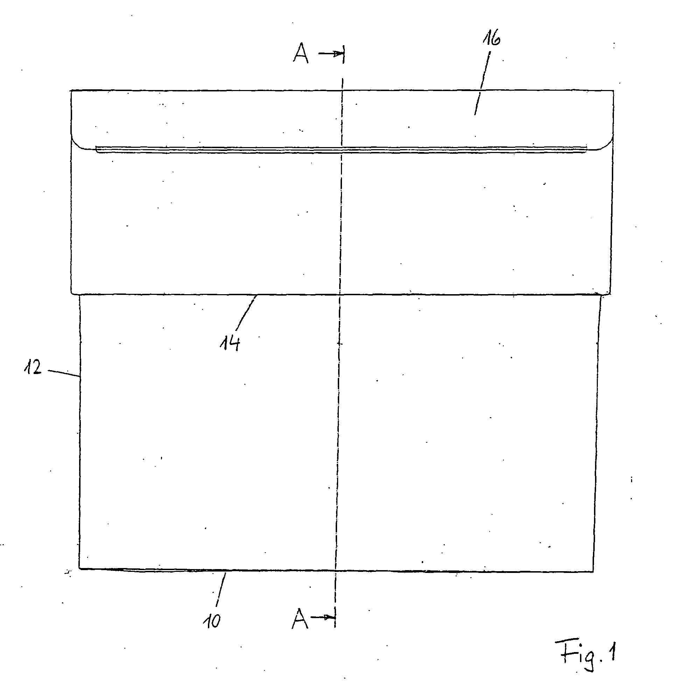

Ein Ausführungsbeispiel der erfindungsgemäß verwendeten Formbehälter ist in der Zeichnung dargestellt. Dabei zeigen
- Fig. 1: eine Seitenansicht des Formbehälters und

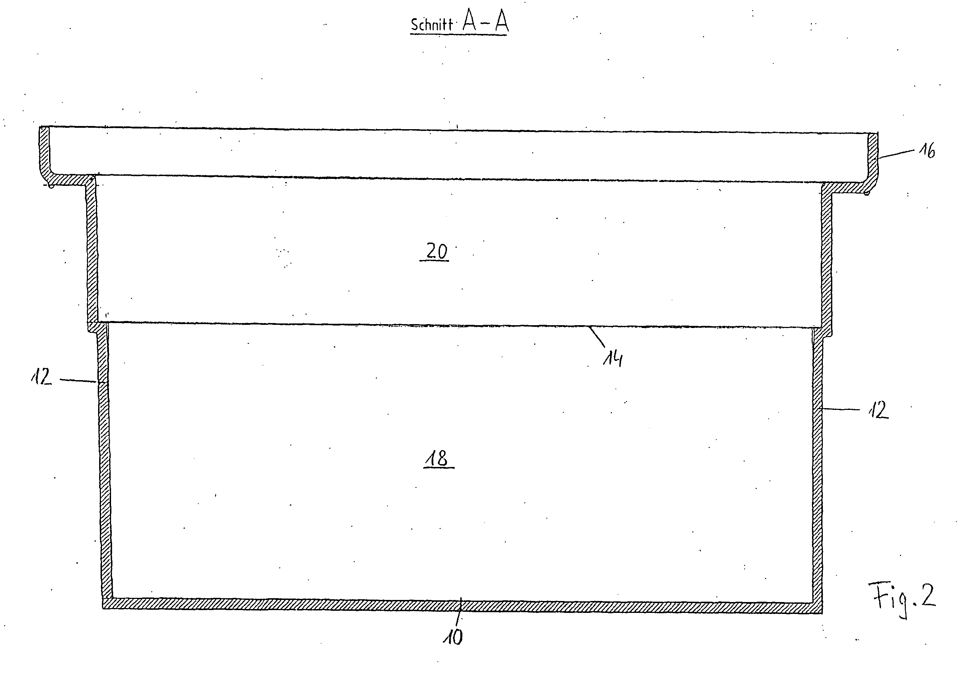

- Fig. 2: einen Vertikalschnitt des Behälters gemäß der Schnittlinie A-A in Fig. 1.

Der Formbehälter besteht aus Kunststoff und hat im Wesentlichen die Form eines Quaders. Der Boden 10 und die vier Seitenwände 12 des Quaders sind geschlossen, während die Oberseite des Formbehälters offen ist. Der Formbehälter bildet auf diese Weise eine wasserdichte Wanne.

Auf etwa 2/3 der Höhe der Seitenwände 12 ist eine Stufe 14 ausgebildet, durch welche die Seitenwände 12 oberhalb der Stufe 14 um die Wandstärke der Seitenwände 12 nach außen versetzt sind. Am oberen Rand der Seitenwände 12 ist eine nach außen ausgewölbte umlaufende Rinne 16 angeformt.

Durch die Ausbildung der Stufe 14 ist es möglich, die Formbehälter ineinander zu stapeln, wobei jeweils der obere Formbehälter in den darunter angeordneten Formbehälter eingreift und mit seiner Unterkante auf der Stufe 14 aufsitzt.

Durch die Stufe 14 wird das Innenvolumen des Formbehälters unterteilt in ein unteres Formvolumen 18, welches vom Boden 10 bis zu der Stufe 14 reicht, und ein darüber liegendes Stapelvolumen 20, welches von der Stufe 14 bis zu dem oberen Rand der Seitenwände 12 reicht.

Die nach ihrer Größe klassifizierten Schinken werden der entsprechenden Größe der Formbehälter in der Weise zugeordnet, daß die in den Formbehälter eingelegten Schinken das untere Formvolumen 18 ausfüllen und noch über die Stufe 14 hinaus in das Stapelvolumen 20 ragen. Dann werden die mit den Schinken befüllten Formbehälter ineinander gestapelt. Die jeweils oberen Formbehälter stehen dabei mit ihrem Boden 10 oben auf dem Schinken des darunter angeordneten Formbehälters auf und pressen diesen zusammen. Der Schinken wird dadurch in das Formvolumen 18 eingedrückt und nimmt dessen Quaderform an. Ist der jeweilige Schinken in das Formvolumen 18 eingedrückt, so sitzt der darüber liegende Formbehälter mit seiner Unterkante auf der Stufe 14 des darunter liegenden Formbehälters auf, so daß der durch die darüber angeordneten befüllten Formbehälter auf den jeweiligen Schinken ausgeübte Druck begrenzt wird. Vom untersten bis zum obersten Formbehälter des Stapels wird somit auf alle Schinken ein ähnlicher Druck ausgeübt.

Die sich in dem Formbehälter ansammelnde Lake kann seitlich in dem Stapelvolumen 20 hochsteigen, wobei überschüssige Lake in der umlaufenden Rinne 16 aufgenommen wird, so daß ein Überlaufen und Auslaufen von Lake begrenzt wird.

## Patentansprüche

1. Verfahren zum Herstellen von Rohpökelwaren, insbesondere rohen Schinken, bei welchem Rohfleischstücke, z.B. entbeinte Schinken, gesalzen, geformt und in Behältern gelagert werden,
**dadurch gekennzeichnet, daß** jedes Rohfleischstück einzeln mit einer seinem Gewicht und ggf. seinem pH-Wert entsprechenden Salzmenge gesalzen wird, daß jedes Rohfleischstück in einem gesonderten einzelnen Formbehälter gelagert wird, dessen Boden und Seitenwände wasserdicht geschlossen sind und der oben offen ist, daß die Formbehälter mit dem eingelegten Rohfleischstück zur Lagerung gestapelt werden, wobei die Formbehälter jeweils mit ihrem Boden auf dem in dem darunter angeordneten Formbehälter eingelegten Rohfleischstück aufstehen und dieses zur Formung in dessen Formbehälter pressen, und daß die Rohfleischstücke nach der Lagerung in den Formbehältern aus diesen entnommen und getrocknet werden.

2. Verfahren nach Anspruch 1,
**dadurch gekennzeichnet, daß** das in den Formbehälter eingepreßte Rohfleischstück vollständig von seiner Lake bedeckt und luftdicht abgeschlossen ist.

3. Verfahren nach Anspruch 1 oder 2,
**dadurch gekennzeichnet, daß** die nach der Lagerung aus den Formbehältern entnommenen Rohfleischstück auf Gitterrosten abgelegt und mit oder ohne Räucherung getrocknet werden.

4. Verfahren nach einem der vorhergehenden Ansprüche,
**dadurch gekennzeichnet, daß** die Schinken in zwei oder mehr Größenklassen sortiert werden und in diesen Größenklassen entsprechende unterschiedlich große Formbehälter eingelegt werden.

5. Verfahren nach einem der vorhergehenden Ansprüche,
**dadurch gekennzeichnet, daß** die Schinken einzeln gewogen werden und gegebenenfalls ihr pH-Wert bestimmt wird, daß die dem Gewicht und dem pH-Wert entsprechend erforderliche Salzmenge bestimmt wird, daß der Schinken mit Salz eingerieben und in dem Formbehälter eingelegt wird und daß die zu der erforderlichen Salzmenge noch fehlende Salzmenge unter Wägung dem in dem Formbehälter liegenden Schinken zugegeben wird.

6. Verfahren nach einem der vorhergehenden Ansprüche,
**dadurch gekennzeichnet, dass** in den Formbehälter eine Starterkultur eingebracht wird.

7. Verwendung eines Formbehälters zur Durchführung des Verfahrens nach einem der vorhergehenden Ansprüche,
**dadurch gekennzeichnet, daß** der Formbehälter die Form eines oben offenen Quaders mit einem geschlossenen Boden (10) und geschlossenen Seitenwänden (12) aufweist und daß die Seitenwände (12) eine nach außen springende Stufe (14) aufweisen, die das Innenvolumen in ein unteres Formvolumen (18) und ein oberes Stapelvolumen (20) teilt und auf der beim Stapeln der jeweils obere Formbehälter in dem unteren Formbehälter aufsitzt.

## Claims

1. Process for producing raw cured products, in particular raw ham, comprising salting, shaping and storing in containers raw meat pieces, for example de-boned ham, **characterized in that** each individual raw meat piece is salted with an amount of salt corresponding to its weight and optionally its pH, wherein each raw meat piece is stored in an individualized single shaping container, of which the floor and sidewalls are closed watertight and the upper side is open, wherein the shaping containers with the therein introduced raw meat piece are stacked for storage, whereupon the shaping containers respectively stand with their floor upon the raw meat piece introduced in the there-under located shaping container and press the meat piece to take the shape of its shaping container, and following storage in the shaping containers the raw meat pieces are removed from these and dried.

2. Process according to claim 1, **characterized in that** the raw meat piece pressed into the shaping container is completely covered and closed off airtight by its brine.

3. Process according to claim 1 or 2, **characterized in that** the raw meat pieces removed from the shaping containers following storage are laid upon grates and dried with or without smoking.

4. Process according to anyone of the preceding claims, **characterized in that** the hams are sorted into two or more size classes and are introduced into shaping containers of different sizes corresponding to these size classes.

5. Process according to anyone of the preceding claims, **characterized in that** the hams are individually weighed, optionally followed by determination of their pH, wherein the necessary amount of salt is determined based upon the weight and pH, wherein the ham is rubbed in with salt and introduced into the shaping container and wherein the missing salt amount necessary to make up the required salt amount quantity is added to the ham lying in the shaping container following weighing.

6. Process according to anyone of the preceding claims, **characterized in that** a starter culture is introduced into the shaping container.

7. Use of a shaping container for carrying out the process according to anyone of the preceding claims, **characterized in that** the shaping container is in the shape of an open quadratic shape with a closed floor (10) and closed sidewalls (12), wherein the side walls (12) exhibit an outwardly extending step (14), which divides the internal volume into a lower shape volume (18) and an upper stacking volume (20), and whereupon on stacking the respective upper shaping container is seated in the lower shaping container.

## Revendications

1. Procédé de fabrication de produits de salaison, notamment de jambon non cuit, selon lequel on sale, on moule et on stocke dans des récipients, des morceaux de viande non cuite, par exemple du jambon désossé,
**caractérisé en ce qu'**
- on sale chaque morceau de viande non cuite, séparément, avec une quantité de sel correspondant à son poids et, le cas échéant à son pH,
- on place chaque morceau de viande non cuite dans un récipient de moulage, distinct, séparé, dont le fond et les parois latérales sont fermés de manière étanche à l'eau et le dessus est ouvert,
- on empile les récipients de moulage dans lesquels on a placé chaque fois un morceau de viande non cuite pour le stockage, chacun des récipients de moulage étant disposé avec son fond sur le morceau de viande non cuite placée dans le récipient de moulage situé en dessous et comprime de morceau de viande non cuite pour le mouler dans ce récipient de moulage, et
- on extrait les morceaux de viande non cuite après leur stockage dans les récipients de moulage et on les sèche.

2. Procédé selon la revendication 1,
**caractérisé en ce qu'**
on couvre complètement le morceau de viande non cuite, comprimé dans le récipient de moulage, avec sa saumure et on ferme de manière étanche à l'air.

3. Procédé selon la revendication 1 ou 2,
**caractérisé en ce qu'**
on place les morceaux de viande non cuite extraits des récipients de moulage, après le stockage, sur une grille et on les sèche avec ou sans fumée.

4. Procédé selon l'une des revendications précédentes,
**caractérisé en ce qu'**
on classe les jambons en deux ou plusieurs classes de taille et on les place dans des récipients de moulage de tailles différentes en fonction des classes de tailles.

5. Procédé selon l'une des revendications précédentes,
**caractérisé en ce qu'**
on pèse séparément les jambons et, le cas échéant, on détermine leur pH, on détermine la quantité de sel nécessaire en fonction du poids et du pH, on enrobe le jambon avec du sel et on le place dans le récipient de moulage et
on ajoute le complément de sel en fonction de la quantité de sel requise, en pesant le jambon placé dans le récipient de moulage.

6. Procédé selon l'une des revendications précédentes,
**caractérisé en ce qu'**
on introduit une culture de démarrage dans le récipient de moulage.

7. Utilisation d'un récipient de moulage pour effectuer le procédé selon l'une des revendications précédentes,
**caractérisée en ce que**
le récipient de moulage a la forme d'un parallélépipède dont le dessus est ouvert et dont le fond (10) de même que les parois latérales (12) sont fermés, et les parois latérales (12) ont un gradin (14) en saillie vers l'extérieur qui subdivise le volume intérieur en un volume inférieur de moule (18) et un volume supérieur d'empilage (20) et lors de l'empilage, le récipient de moulage chaque fois du dessus s'appuie sur le gradin intérieur dans le récipient de moulage inférieur.
